# EUROPEAN PATENT APPLICATION

(11) **EP 4 768 618 A1**
(43) Date of publication of application: **01.07.2026**
(21) Application number: 24895704.5
(22) Date of filing: 30.07.2024
(51) Int. Cl.: C22C 38/02, C22C 38/04, C22C 38/06, C21D 8/12, C21D 1/26, C21D 1/74

(54) **NON-ORIENTED SILICON STEEL AND PREPARATION METHOD THEREFOR**

(30) Priority: 27.11.2023 CN 202311588428
(71) Applicant: Zhangjiagang Yangtze River Cold Rolled Plate Co. Ltd, Suzhou, Jiangsu 215625 (CN); Institute of Research of Iron & Steel, Jiangsu Province/Sha-Steel, Co., Ltd., Jiangsu 215625 (CN); Jiangsu Shagang Steel Co., Ltd., Suzhou, Jiangsu 215625 (CN)
(72) Inventor: LU, Jiadong, Jiangsu 215625 (CN); YUE, Changxiang, Jiangsu 215625 (CN); CHEN, Gang, Jiangsu 215625 (CN); MA, Jianchao, Jiangsu 215625 (CN)
(74) Representative: Gille Hrabal Partnerschaftsgesellschaft mbB Patentanwälte
(86) International application number: PCT/CN2024/108506
(87) International publication number: WO 2025/112601

(57) **Abstract**

The present application discloses a non-oriented silicon steel and a preparation method therefor. The preparation method comprises: a Si content of 3.3~3.6% and an Al content of 0.4~0.8% in a continuous casting slab; after heating, hot rolling and coiling the continuous casting slab, producing a primary cold-rolled sheet of 0.50~0.70mm through a first-stage cold rolling, and then holding at 820°C~860°C; then producing a secondary cold-rolled sheet of 0.15~0.20mm through a second-stage cold rolling, and then holding at 900°C~1000°C to obtain a secondary annealed sheet; cooling, coating and finishing to obtain a finished product. The finished product can be used as a material for a stator core of a new energy drive motor, solving the technical problems of poor magnetic properties, high alloy elements, a long process route, and complex procedures in the existing technology.

## Description

The present application claims priority from a Chinese patent application with an application date of November 27, 2023, an application number of 202311588428.8, and an invention title of "Preparation Method of Non-Oriented Silicon Steel", the entire content of which is incorporated herein by reference.

### TECHNICAL FIELD

The present application belongs to the technical field of steel material preparation, and relates to a non-oriented silicon steel, and a preparation method of non-oriented silicon steel, particularly an ultra-thin non-oriented silicon steel for a stator core of a new energy drive motor and a production method therefor

### BACKGROUND

New energy electric vehicles are one of the driving forces of the rapidly emerging global new energy economy, are bringing historical changes to the global automotive manufacturing industry, and also have significant impacts on other industries. A new energy drive motor is one of the three core components of new energy electric vehicles, and the driving characteristics of the new energy drive motor directly determine the main performance indicators of vehicle driving such as hill climbing, acceleration, and maximum speed, making the new energy drive motor an important component of new energy electric vehicles.

A drive motor mainly consists of a stator, a rotor and housing components, and the driving principle of the drive motor is roughly as follows: based on an electromagnetic induction phenomenon, the stator is used to generate a rotating magnetic field and act on the rotor to form a magnetic force, thereby driving a vehicle. Therefore, the magnetic properties of a core, such as an iron loss and a magnetic flux density, especially the iron loss of a stator core, determine the driving characteristics of the drive motor. Furthermore, the mechanical strength of the core, especially the strength of a rotor core, also affects the reliability of the drive motor in a high-speed driving.

However, in existing technologies of non-oriented silicon steel for a drive motor stator core, such as application numbers CN201711204222.5, CN202010143200.8, CN201710670723.6, etc., there are generally defects of poor product magnetic properties and high production costs due to high alloy elements. In another type of existing technology, such as application numbers CN201910612755.X, CN202010143200.8, etc., normalizing processes are adopted to improve magnetic properties, but a risk of cold rolling difficulties is thereby introduced. Accordingly, preheating is required before cold rolling, making a process route long and procedures complex, with both equipment costs and process costs remaining high.

### SUMMARY

To solve the technical problems of the existing technology, an object of the present application is to provide a non-oriented silicon steel and a preparation method thereof.

To achieve the above inventive object, an embodiment of the present application provides a non-oriented silicon steel. The chemical composition of a substrate of the non-oriented silicon steel by mass percentage is: C≤0.0020%, S≤0.0015%, Si:3.30~3.60%, Al:0.40~0.80%, Mn:0.50~1.00%, P≤0.015%, Sn:0.03~0.06%, Nb≤0.003%, V≤0.003%, Ti≤0.003%, Cr≤0.02%, Ni≤0.02%, Cu≤0.02%, N≤0.0030%, with a balance being Fe and inevitable inclusions.

Preferably, the chemical composition of the non-oriented silicon steel by mass percentage is: 4.00%≤Si+Al≤4.20%.

Preferably, the non-oriented silicon steel has a magnetic flux density B₅₀₀₀≥1.64T, a medium frequency iron loss P_{1.0/400}≤12.0W/kg, and a high frequency iron loss P_{1.0/1000}≤30.0W/kg.

Preferably, the non-oriented silicon steel has a thickness of 0.15mm, a magnetic flux density B₅₀₀₀≥1.64T, a medium frequency iron loss P_{1.0/400}≤11.0W/kg, and a high frequency iron loss P_{1.0/1000}≤27.0W/kg.

Preferably, the non-oriented silicon steel has a thickness of 0.20mm, a magnetic flux density B₅₀₀₀≥1.64T, a medium frequency iron loss P_{1.0/400}≤12.0W/kg, and a high frequency iron loss P_{1.0/1000}≤30.0W/kg.

Preferably, the non-oriented silicon steel has an average grain size of 60~120µm.

To achieve the above inventive object, an embodiment of the present application provides a preparation method of a non-oriented silicon steel. The preparation method comprises:
steelmaking, and preparing a continuous casting slab with a thickness of 220~240mm; the chemical composition of the continuous casting slab by mass percentage is: C≤0.0020%, S≤0.0015%, Si:3.30~3.60%, Al:0.40~0.80%, Mn:0.50~1.00%, P≤0.015%, Sn:0.03~0.06%, Nb≤0.003%, V≤0.003%, Ti≤0.003%, Cr≤0.02%, Ni≤0.02%, Cu≤0.02%, N≤0.0030%, with a balance being Fe and inevitable inclusions;
heating the continuous casting slab to 1080~1120°C and holding for 150~200min, and then rolling to form an intermediate slab with a thickness of 35~45mm, and then subjecting the intermediate slab to a finish rolling and a coiling to obtain a hot-rolled coil with a thickness of 2.00~2.70mm; wherein, a start rolling temperature of the finish rolling is 930~970°C, a finish rolling temperature is 820~860°C, a coiling temperature is 580~620°C, and a reduction ratio of the finish rolling is 93~95%;
directly subjecting the hot-rolled coil to a pickling treatment, and then producing a primary cold-rolled sheet of 0.50~0.70mm through a first-stage cold rolling of 3~5 passes, after which the primary cold-rolled sheet is held at 820°C~860°C for 2~5min in a mixed atmosphere of 25%H₂+75%N₂ to obtain a primary annealed sheet; wherein, a starting temperature of the first-stage cold rolling is 20~40°C, a total reduction ratio is 70~80%, and a reduction ratio of each pass is 15~30%;
subjecting the primary annealed sheet to a second-stage cold rolling of 2~3 passes to produce a secondary cold-rolled sheet of 0.15~0.20mm, after which the secondary cold-rolled sheet is held at 900°C~1000°C for 2~5min in the mixed atmosphere of 25%H₂+75%N₂ to obtain a secondary annealed sheet; wherein, a starting temperature of the second-stage cold rolling is 20~40°C, a total reduction ratio is 65~75%, and a reduction ratio of each pass is 25~45%;
subjecting the secondary annealed sheet to a cooling, a coating and a finishing to obtain a finished product of a non-oriented silicon steel.

Preferably, the chemical composition of the continuous casting slab by mass percentage is: 4.00%≤Si+Al≤4.20%.

Preferably, during steelmaking, a molten iron and a scrap steel are first used for a converter smelting, followed by a vacuum refining and an alloying, to obtain a molten steel for the continuous casting slab; wherein, an end of the converter smelting by mass percentage is C:0.020~0.050%, S≤0.0020%, P≤0.015%.

Preferably, the chemical composition of the molten iron by mass percentage is: C≥3.5%, S≤0.0015%, Si: 0.20~0.80%, Al≤0.10%, Mn≤0.60%, P≤0.15%, Nb≤0.003%, V≤0.03%, Ti≤0.10%, Cr≤0.03%, Ni≤0.02%, Cu≤0.02%, with a balance being Fe and inevitable inclusions.

Preferably, the scrap steel employs a scrap steel material that satisfies by mass percentage C≤0.0050%, S≤0.0025%, Si:0.50~3.60%, Al≤1.0%, Mn:0.20~1.50%, P≤0.05%, Sn≤0.20%, Nb≤0.003%, V≤0.003%, Ti≤0.003%, Cr≤0.02%, Ni≤0.02%, Cu≤0.02%.

Preferably, a weight of the scrap steel accounts for 20~25% of a total weight of the scrap steel and the molten iron.

Preferably, a work roll roughness Ra of a rolling mill used in the first-stage cold rolling is 3.5~3.0µm.

Preferably, a work roll roughness Ra of a rolling mill used in the second-stage cold rolling is 0.6~0.3µm.

Preferably, an average grain size of the primary annealed sheet is 50~80µm.

Preferably, an average grain size of the secondary annealed sheet is 60~120µm.

Preferably, the finished product of the non-oriented silicon steel has a magnetic flux density B₅₀₀₀≥1.64T, a medium frequency iron loss P_{1.0/400}≤12.0W/kg, and a high frequency iron loss P_{1.0/1000}≤30.0W/kg.

Preferably, the finished product of the non-oriented silicon steel has a thickness of 0.15mm, a magnetic flux density B₅₀₀₀≥1.64T,a medium frequency iron loss P_{1.0/400}≤11.0W/kg, and a high frequency iron loss P_{1.0/1000}≤27.0W/kg.

Preferably, the finished product of the non-oriented silicon steel has a thickness of 0.20mm, a magnetic flux density B₅₀₀₀≥1.64T, a medium frequency iron loss P_{1.0/400}≤12.0W/kg, and a high frequency iron loss P_{1.0/1000}≤30.0W/kg.

Compared with the existing technology, the beneficial effects of the present application are:
(1) in terms of a chemical composition, elements such as Nb, V, Ti, Cr, Ni, Cu are treated as impurity elements (not added during an alloying in a steelmaking), while combining a design concept of a high silicon and a high aluminum, under a condition of a low alloy cost, laying a foundation for the excellent magnetic properties of a finished product from a chemical composition aspect;
(2) based on the chemical composition, further combined with a process route and specific parameter settings of a hot rolling, a first-stage cold rolling and an annealing, a second-stage cold rolling and an annealing, on one hand, a control of a grain size, inclusions, a texture and other aspects is achieved, and an ultra-thin steel sheet can be obtained while reducing a medium frequency iron loss and a high frequency iron loss of the finished product, ensuring excellent magnetic properties; on another hand, compared with the existing technology, a normalizing process and a preheating before a cold rolling are cancelled, solving the problems of a long process route, complex procedures, and high equipment costs and process costs in the existing technology; on another hand, a problem of a high cold rolling difficulty caused by factors such as the high silicon and the high aluminum, and an ultra-thin finished product is avoided, achieving a stable production with a low cold rolling difficulty;
(3) the finished product of the non-oriented silicon steel can be used as a material for a stator core of a new energy drive motor, solving the technical problems of poor magnetic properties, high alloy elements, a long process route, and complex procedures in the existing technology.

### DETAILED DESCRIPTION

To make the objectives, technical solutions and advantages of the present application clearer, the technical solutions of the present application will be clearly and completely described below in combination with specific embodiments of the present application. Obviously, the described embodiments are only part of the embodiments of the present application, not all of the embodiments. Based on the embodiments in the present application, all other embodiments obtained by persons of ordinary skill in the art without creative work fall within the protection scope of the present application.

An embodiment of the present application provides a preparation method of a non-oriented silicon steel. The preparation method adopts a process route comprising a steelmaking, a continuous casting, a heating, a hot rolling, a pickling, a first-stage cold rolling and an annealing, a second-stage cold rolling and an annealing, a cooling, a coating, and a finishing to prepare a finished product of a non-oriented silicon steel.

The obtained finished product of the non-oriented silicon steel is an ultra-thin sheet, for example, with a thickness of 0.15~0.20mm, and the thickness is also a thickness of a secondary cold-rolled sheet obtained during the second-stage cold rolling. It should be noted here that, as is known in the art, in view of that the secondary cold-rolled sheet will undergo a coating process afterwards, strictly speaking, the thickness of the finished product of the non-oriented silicon steel is a sum of the thickness of the secondary cold-rolled sheet and a coating thickness; however, because the coating thickness is very thin compared to the secondary cold-rolled sheet, i.e., almost negligible, it is conventional in the art to generally not consider the coating thickness when describing the thickness of a finished product of a non-oriented silicon steel. Therefore, the thickness of the secondary cold-rolled sheet in the present application can be considered as the thickness of the finished product.

Specifically, the preparation method, through a chemical composition design and a process design, achieves advantages of a short process route, simple procedures easy for a quality control, low alloy costs and low production equipment costs in terms of production, while in terms of product performance, the prepared finished product of the non-oriented silicon steel has excellent magnetic properties and is suitable for manufacturing a core of a new energy drive motor, especially when used as a material for a stator core, having significant advantages compared to the existing technology.

Specifically, the preparation method comprises the following step 1 to step 5.

### Step 1, Steelmaking and Continuous Casting

In the step 1, a steelmaking is first performed, and a molten steel obtained from the steelmaking is prepared into a continuous casting slab with a thickness of 220~240mm through a continuous casting.

Wherein, during an alloying process of the steelmaking, Nb, V, Ti, Cr, Ni, Cu are not added. The chemical composition of the continuous casting slab by mass percentage is: C≤0.0020%, S≤0.0015%, Si:3.30~3.60%, Al:0.40~0.80%, Mn:0.50~1.00%, P≤0.015%, Sn:0.03~0.06%, N≤0.0030%, with a balance being Fe and inevitable inclusions. That is, elements such as Nb, V, Ti, Cr, Ni, Cu are treated as impurity elements in the preparation method, for example, the mass percentages of these elements in the continuous casting slab may be respectively: Nb≤0.003%, V≤0.003%, Ti≤0.003%, Cr≤0.02%, Ni≤0.02%, Cu≤0.02%.

It can be understood that, in order to obtain the continuous casting slab with the above chemical composition, during a steelmaking process, a molten steel needs to be smelted with the above chemical composition as a target, that is, the chemical composition of the molten steel obtained from the steelmaking is the same as the chemical composition of the continuous casting slab. Furthermore, the chemical composition of the continuous casting slab is also the chemical composition of a substrate of the finally obtained finished product of the non-oriented silicon steel.

That is, an embodiment of the present application provides a non-oriented silicon steel, wherein the chemical composition of a substrate of the non-oriented silicon steel by mass percentage is: C≤0.0020%, S≤0.0015%, Si:3.30~3.60%, Al:0.40~0.80%, Mn:0.50~1.00%, P≤0.015%, Sn:0.03~0.06%, Nb≤0.003%, V≤0.003%, Ti≤0.003%, Cr≤0.02%, Ni≤0.02%, Cu≤0.02%, N≤0.0030%, with a balance being Fe and inevitable inclusions.

The following introduces the functions of some chemical elements mentioned in the above chemical composition.
Si, Al: Si and Al are capable of increasing a resistivity of a steel sheet, thereby simultaneously reducing a medium frequency iron loss and a high frequency iron loss of a finished product; but an increase in Si and Al content will reduce a magnetic induction, and cause a cold rolling difficulty. In the present application, through a process improvement, on a basis of a high silicon and a high aluminum with a Si content controlled at 3.30~3.60% and an Al content at 0.40~0.80%, a low-difficulty cold rolling is achieved;
Mn: is capable of improving a structure and a texture of a hot-rolled sheet, which is beneficial for improving magnetic properties;
Sn: is easy to segregate at grain boundaries, and is capable of improving magnetic properties.

On a basis of the above chemical composition, as a further preferred design, the chemical composition of the continuous casting slab by mass percentage also satisfies: 4.00%≤Si+Al≤4.20%, in such an implementation, compared to other implementations that satisfy conditions of Si: 3.30~3.60% and Al: 0.40~0.80% (for example, Si+Al<4.00%, or Si+Al>4.20%), more excellent magnetic properties can be obtained.

### Step 2, Heating and Hot Rolling

In the step 2, the continuous casting slab is first heated to 1080~1120°C in a heating furnace and held for 150~200min. Then, after the continuous casting slab exits the heating furnace, the continuous casting slab enters a hot rolling process, specifically: first rolling to form an intermediate slab with a thickness of 35~45mm; then subjecting the intermediate slab to a finish rolling and a coiling to obtain a hot-rolled coil with a thickness of 2.00~2.70mm.

Wherein, a start rolling temperature of the finish rolling is 930~970°C, a finish rolling temperature is 820~860°C, a coiling temperature is 580~620°C, and a reduction ratio of the finish rolling is 93~95%.

Thus, by adopting a technology of a low temperature heating, a low temperature hot rolling, and a low temperature coiling, on one hand, a lower temperature is adopted in a heating process to avoid a solid solution of coarse precipitates such as MnS and AlN during the heating process, thereby avoiding a formation of fine precipitates during a subsequent hot rolling process that would deteriorate magnetic properties; on another hand, through a control of a hot rolling temperature and the coiling temperature, a uniform deformed ferrite structure is obtained in the hot-rolled coil, improving a rollability of a rolled material, laying a smooth foundation for a stable cold rolling under a high silicon and a high aluminum composition, making a preparation of a product with excellent magnetic properties under the high silicon and the high aluminum composition possible.

### Step 3, Pickling, First-stage Cold Rolling and Annealing

In the step 3, the hot-rolled coil is uncoiled and directly subjected to a pickling treatment. That is to say, in the present application, the hot-rolled coil does not need to be normalized before the pickling treatment.

After the pickling treatment, a primary cold-rolled sheet of 0.50~0.70mm is produced through a first-stage cold rolling of 3~5 passes. That is, in the first-stage cold rolling, a pickled sheet is subjected to a cold rolling of 3~5 passes to obtain a sheet of 0.50~0.70mm. For ease of understanding, the present application names the sheet obtained from the first-stage cold rolling as a primary cold-rolled sheet.

An annealing treatment is then performed, that is, the obtained primary cold-rolled sheet is held at 820°C~860°C for 2~5min in a mixed atmosphere of 25%H2+75%N2 to obtain an annealed sheet. Similar to the above, for ease of understanding, the present application names the sheet obtained here as a primary annealed sheet.

In the step 3, a starting temperature of the first-stage cold rolling is 20~40°C, it can be seen that a sheet material of the present application, after the pickling treatment and before the first-stage cold rolling, does not need a preheating before a cold rolling as in the existing technology mentioned in the background art.

Furthermore, a total reduction ratio of the first-stage cold rolling is 70~80%, and a reduction ratio of each pass is 15~30%.

Thus, through the aforementioned hot rolling, the first-stage cold rolling and an annealing, an average grain size of the obtained primary annealed sheet is 50~80µm.

### Step 4, Second-stage Cold Rolling and Annealing

In the step 4, the primary annealed sheet obtained from the step 3 is subjected to a second-stage cold rolling of 2~3 passes to produce a secondary cold-rolled sheet of 0.15~0.20mm. That is, the second-stage cold rolling includes a cold rolling of 3~5 passes to obtain a sheet of 0.50~0.70mm. For ease of understanding, the present application names the sheet obtained from the second-stage cold rolling process as a secondary cold-rolled sheet.

After which the secondary cold-rolled sheet is held at 900°C~1000°C for 2~5min in the mixed atmosphere of 25%H₂+75%N₂ to obtain an annealed sheet. Similar to the above, for ease of understanding, the present application names the sheet obtained here as a secondary annealed sheet.

In the step 4, a starting temperature of the second-stage cold rolling is 20~40°C, it can be seen that the sheet material of the present application, after the first-stage cold rolling and the annealing and before the second-stage cold rolling, does not need the preheating before the cold rolling as in the existing technology mentioned in the background art.

In addition, a total reduction ratio of the second-stage cold rolling is 65~75%, and a reduction ratio of each pass is 25~45%.

Thus, through the aforementioned hot rolling, the first-stage cold rolling and the annealing, combined with the second-stage cold rolling and an annealing of the step, an average grain size of the secondary annealed sheet is 60~120µm, not only achieving excellent magnetic properties under the high silicon and the high aluminum composition, but also with a low rolling difficulty, avoiding a risk of a high cold rolling difficulty and a strip breakage. It can be understood that the average grain size of the secondary annealed sheet is an average grain size of a final finished product.

### Step 5, Cooling, Coating and Finishing

The secondary annealed sheet obtained in the step 4 is subjected to a cooling, a coating and a finishing to obtain a finished product of a non-oriented silicon steel. In the present application, the cooling, the coating and the finishing adopt conventional techniques known in the art, which will not be elaborated here.

Thus, the present application, through the above preparation method, including a combination of a chemical composition and a production process, treats elements such as Nb, V, Ti, Cr, Ni, Cu as impurity elements (not added during an alloying in a steelmaking), while combining a design concept of a high silicon and a high aluminum, under a condition of a low alloy cost, laying a foundation for the excellent magnetic properties of the finished product from a chemical composition aspect; and further combined with a process route and specific parameter settings of a hot rolling, a first-stage cold rolling and an annealing, a second-stage cold rolling and an annealing, on one hand, a control of a grain size, inclusions, a texture and other aspects is achieved, and an ultra-thin steel sheet can be obtained while reducing a medium frequency iron loss and a high frequency iron loss of the finished product, ensuring excellent magnetic properties; on another hand, compared with the existing technology, a normalizing process and a preheating before a cold rolling are cancelled, solving the problems of a long process route, complex procedures, and high equipment costs and process costs in the existing technology; on another hand, a problem of a high cold rolling difficulty caused by factors such as the high silicon and the high aluminum, and an ultra-thin finished product is avoided, achieving a stable production with a low cold rolling difficulty.

In addition, from a theoretical perspective, the beneficial effects of the present application include:
(1) adopting a high Si and a high Al composition design and a thin gauge finished product design increases a resistivity of a non-oriented silicon steel, while laying a foundation for reducing the medium frequency iron loss and the high frequency iron loss of the finished product;
(2) cancelling a normalizing process before a cold rolling improves a cold rollability of a rolled material, and combined with the first-stage cold rolling and the annealing, the second-stage cold rolling and the annealing, reduces a risk of a strip breakage and achieves a stable production;
(3) through a control of impurity elements, combined with the first-stage cold rolling and the annealing, reducing a resistance of inclusions to a domain wall movement, increasing a proportion of a favorable texture, achieving a reduction of the medium frequency iron loss and the high frequency iron loss and an improvement of a magnetic induction; meanwhile, through the second-stage cold rolling and the annealing, achieving a grain control of the secondary annealed sheet, avoiding a significant intensification of an eddy current loss caused by a rapid magnetization change during the domain wall movement under high frequency operation conditions of motors, thereby achieving a further reduction of the high frequency iron loss;
(4) in addition, through a combination of a chemical composition and a process method, while improving magnetic properties, a surface quality can also be improved, avoiding corrugation defects.

In summary, the finished product of the non-oriented silicon steel obtained by the present application has excellent magnetic properties, with a magnetic flux density B₅₀₀₀≥1.64T, a medium frequency iron loss P_{1.0/400}≤12.0W/kg, and a high frequency iron loss P_{1.0/1000}≤30.0W/kg. When used for manufacturing a stator core of a new energy high-speed drive motor, the finished product of the non-oriented silicon steel simultaneously satisfies the high efficiency requirements of a new energy vehicle during a medium-speed driving on an urban road and a high-speed driving on a highway, increasing a driving range.

More specifically, in an embodiment, the obtained finished product of the non-oriented silicon steel has a thickness of 0.20mm, a magnetic flux density B₅₀₀₀≥1.64T, a medium frequency iron loss P_{1.0/400}≤12.0W/kg, and a high frequency iron loss P_{1.0/1000}≤30.0W/kg. In a more preferred embodiment, the obtained finished product of the non-oriented silicon steel is thinner with better magnetic properties, having a thickness of 0.15mm, a magnetic flux density B₅₀₀₀≥1.64T, a medium frequency iron loss P_{1.0/400}≤11.0W/kg, and a high frequency iron loss P_{1.0/1000}≤27.0W/kg.

Further, in the step 1, during a steelmaking, a molten iron and a scrap steel are first used for a converter smelting, followed by a vacuum refining and an alloying to obtain a molten steel for the continuous casting slab; wherein, an end of the converter smelting by mass percentage is C: 0.020~0.050%, S≤0.0020%, P≤0.015%.

Wherein, the chemical composition of the molten iron by mass percentage is: C≥3.5%, S≤0.0015%, Si:0.20~0.80%, Al≤0.10%, Mn≤0.60%, P≤0.15%, Nb≤0.003%, V≤0.03%, Ti≤0.10%, Cr≤0.03%, Ni≤0.02%, Cu≤0.02%, with a balance being Fe and inevitable inclusions.

The scrap steel employs a scrap steel material that satisfies by mass percentage C≤0.0050%, S≤0.0025%, Si: 0.50~3.60%, Al≤1.0%, Mn: 0.20~1.50%, P≤0.05%, Sn≤0.20%, Nb≤0.003%, V≤0.003%, Ti≤0.003%, Cr≤0.02%, Ni≤0.02%, Cu≤0.02%.

A weight of the scrap steel accounts for 20~25% of a total weight of the scrap steel and the molten iron.

Thus, through a design of a composition and a proportion of the molten iron and the scrap steel during the steelmaking, a steelmaking difficulty can be greatly reduced, and a precise and an excellent control of inclusions can be very easily achieved, realizing low impurities and a high cleanliness. Of course, a steelmaking process of the present application is not limited to a preferred low-difficulty steelmaking scheme, and a molten iron and/or a scrap steel of other compositions and scrap steel proportions can also be selected to achieve the advantages of finished product magnetic properties and a cold rolling difficulty described above in the present application.

In addition, a rolling mill used in the first-stage cold rolling and a rolling mill used in the second-stage cold rolling are single-stand cold rolling mills. Preferably, a work roll roughness Ra of the rolling mill used in the first-stage cold rolling is 3.5~3.0µm; a work roll roughness Ra of the rolling mill used in the second-stage cold rolling is 0.6~0.3µm. Thus, in addition to magnetic properties, a surface quality of the finished product can be further improved, avoiding "corrugated" defects on a finished product surface.

Furthermore, in an embodiment, during the second-stage cold rolling and the annealing in the step 4, a constant speed production is adopted.

The detailed descriptions listed above are merely specific descriptions for feasible embodiments of the present application, and the detailed descriptions are not intended to limit the protection scope of the present application. All equivalent embodiments or changes made without departing from the technical spirit of the present application should be included within the protection scope of the present application.

The beneficial effects of the present application are demonstrated below through 6 examples and 5 comparative examples. Of course, the following 6 examples are not all embodiments under the technical spirit of the present application, but merely list a part of numerous embodiments to intuitively demonstrate an embodiment of the present application, and a feasibility of other embodiments in an embodiment of the present application cannot be denied based on these examples. Moreover, the following 5 comparative examples are merely to illustrate the beneficial effects of an embodiment of the present application, and these comparative examples are not existing technology.

Specifically, these examples and comparative examples adopt the following method to prepare a finished product of a non-oriented silicon steel.
(1) A steelmaking is first performed, and a molten steel obtained from the steelmaking is prepared into a continuous casting slab through a continuous casting; a thickness and a chemical composition of the continuous casting slab of each example and comparative example are shown in Table 1.

**[Table 1]**

| | chemical composition by mass percentage, % | | | | | | | | | | | | | | Thick., mm |
|---|---|---|---|---|---|---|---|---|---|---|---|---|---|---|---|
| | C | S | N | Si | Al | Mn | P | Nb | V | Ti | Cr | Ni | Cu | Sn | |
| Ex. 1 | 0.0015 | 0.0010 | 0.0011 | 3.46 | 0.67 | 0.81 | 0.010 | 0.0023 | 0.0019 | 0.0021 | 0.011 | 0.016 | 0.010 | 0.045 | 226 |
| Ex. 2 | 0.0017 | 0.0009 | 0.0013 | 3.51 | 0.53 | 0.73 | 0.008 | 0.0018 | 0.0015 | 0.0017 | 0.009 | 0.013 | 0.012 | 0.052 | 229 |
| Ex. 3 | 0.0012 | 0.0012 | 0.0013 | 3.56 | 0.46 | 0.77 | 0.011 | 0.0021 | 0.0022 | 0.0020 | 0.015 | 0.012 | 0.011 | 0.048 | 222 |
| Ex. 4 | 0.0015 | 0.0010 | 0.0010 | 3.48 | 0.70 | 0.68 | 0.009 | 0.0015 | 0.0019 | 0.0014 | 0.012 | 0.008 | 0.012 | 0.053 | 227 |
| Ex. 5 | 0.0014 | 0.0012 | 0.0012 | 3.41 | 0.52 | 0.70 | 0.010 | 0.0018 | 0.0021 | 0.0023 | 0.010 | 0.011 | 0.012 | 0.051 | 223 |
| Ex. 6 | 0.0014 | 0.0008 | 0.0011 | 3.58 | 0.75 | 0.74 | 0.012 | 0.0017 | 0.0018 | 0.0021 | 0.012 | 0.013 | 0.013 | 0.044 | 226 |
| Comp. 1 | 0.0013 | 0.0011 | 0.0014 | 3.51 | 0.64 | 0.78 | 0.011 | 0.0024 | 0.0014 | 0.0025 | 0.012 | 0.016 | 0.012 | 0.053 | 223 |
| Comp. 2 | 0.0011 | 0.0015 | 0.0012 | 3.54 | 0.62 | 0.81 | 0.011 | 0.0020 | 0.0016 | 0.0021 | 0.013 | 0.013 | 0.010 | 0.050 | 223 |
| Comp. 3 | 0.0012 | 0.0014 | 0.0012 | 3.23 | 0.28 | 0.70 | 0.011 | 0.0023 | 0.0016 | 0.0022 | 0.011 | 0.016 | 0.010 | 0.055 | 227 |
| Comp. 4 | 0.0012 | 0.0013 | 0.0015 | 3.67 | 0.84 | 0.82 | 0.012 | 0.0018 | 0.0020 | 0.0024 | 0.010 | 0.014 | 0.012 | 0.052 | 225 |
| Comp. 5 | 0.0011 | 0.0014 | 0.0012 | 3.85 | 1.03 | 0.84 | 0.012 | 0.0020 | 0.0017 | 0.0021 | 0.011 | 0.016 | 0.012 | 0.050 | 223 |
| Comp. 6 | 0.0037 | 0.0028 | 0.0033 | 3.53 | 0.52 | 0.72 | 0.013 | 0.0016 | 0.0021 | 0.0017 | 0.014 | 0.012 | 0.011 | 0.047 | 224 |

(2) A continuous casting slab is first heated and held in a heating furnace; then, after the continuous casting slab exits the heating furnace, the continuous casting slab is first rolled into an intermediate slab; then the intermediate slab is subjected to a finish rolling and a coiling to obtain a hot-rolled coil.
Wherein, a heating temperature, a holding time, an intermediate slab thickness, a start rolling temperature and a finish rolling temperature of the finish rolling, a coiling temperature, and a hot-rolled coil thickness are shown in Table 2 respectively.

**[Table 2]**

| | Heat. Temp., °C | Hold. Time, min | Slab Thick., mm | Red. Ratio, % | SRT, °C | FRT, °C | HRC Thick., mm |
|---|---|---|---|---|---|---|---|
| Ex. 1 | 1103 | 174 | 38 | 93.8 | 953 | 844 | 2.34 |
| Ex. 2 | 1111 | 183 | 38 | 94.0 | 961 | 849 | 2.28 |
| Ex. 3 | 1100 | 188 | 40 | 94.1 | 958 | 845 | 2.37 |
| Ex. 4 | 1113 | 179 | 42 | 94.3 | 949 | 840 | 2.40 |
| Ex. 5 | 1097 | 176 | 40 | 94.1 | 945 | 842 | 2.35 |
| Ex. 6 | 1108 | 182 | 41 | 94.4 | 952 | 845 | 2.31 |
| Comp. 1 | 1110 | 180 | 41 | 94.3 | 963 | 849 | 2.32 |
| Comp. 2 | 1111 | 182 | 40 | 94.5 | 961 | 848 | 2.35 |
| Comp. 3 | 1115 | 177 | 40 | 94.1 | 966 | 850 | 2.36 |
| Comp. 4 | 1112 | 181 | 41 | 94.3 | 957 | 843 | 2.33 |
| Comp. | 1110 | 179 | 42 | 94.4 | 960 | 846 | 2.32 |
| 5 | | | | | | | |
| Comp. 6 | 1118 | 183 | 39 | 94.1 | 968 | 851 | 2.29 |

(3) Examples 1 to 6, a hot-rolled coil from the step (2) is uncoiled and directly subjected to a pickling treatment without a normalizing; then without a preheating, the hot-rolled coil is directly subjected to a first-stage cold rolling of 3~5 passes to produce a primary cold-rolled sheet, with a reduction ratio of each pass controlled at 15~30%; the obtained primary cold-rolled sheet undergoes a first annealing in a mixed atmosphere of 25%H₂+75%N₂ to obtain a primary annealed sheet.

The primary annealed sheet is subjected to a second-stage cold rolling of 2~3 passes to produce a secondary cold-rolled sheet without a preheating, with a reduction ratio of each pass controlled at 25~45%; after which the secondary cold-rolled sheet undergoes a second annealing in the mixed atmosphere of 25%H₂+75%N₂ to obtain a secondary annealed sheet.

Wherein, in each example, a starting temperature of the first-stage cold rolling, a work roll roughness of a rolling mill, a thickness of the primary cold-rolled sheet, a primary annealing temperature, and a primary annealing time are shown in Table 3 respectively; a starting temperature of the second-stage cold rolling, a work roll roughness of a rolling mill, a thickness of the secondary cold-rolled sheet, a secondary annealing temperature, and a secondary annealing time are also shown in Table 3 respectively.

**[Table 3]**

| | first-stage cold rolling | | | primary annealing | | second-stage cold rolling | | | secondary annealing | |
|---|---|---|---|---|---|---|---|---|---|---|
| | Start Temp., °C | Ra, µm | Thick., mm | Temp., °C | Time, min | Start Temp., °C | Ra, µm | Thick., mm | Temp., °C | Time, min |
| Ex. 1 | 32 | 3.1 | 0.63 | 848 | 3 | 28 | 0.4 | 0.20 | 988 | 2 |
| Ex. 2 | 28 | 3.3 | 0.58 | 846 | 4 | 33 | 0.4 | 0.15 | 979 | 3 |
| Ex. 3 | 25 | 3.3 | 0.61 | 851 | 3 | 27 | 0.5 | 0.17 | 983 | 3 |
| Ex. 4 | 30 | 3.1 | 0.60 | 845 | 4 | 31 | 0.4 | 0.18 | 986 | 2 |
| Ex. 5 | 33 | 3.1 | 0.58 | 845 | 4 | 35 | 0.5 | 0.17 | 985 | 3 |
| Ex. 6 | 29 | 3.2 | 0.59 | 852 | 3 | 33 | 0.4 | 0.17 | 981 | 3 |

For Comparative Example 1 and Comparative Example 2, after uncoiling the hot-rolled coil from the step (2), a normalizing treatment is first performed, followed by a pickling treatment; and-Comparative Example 1 undergoes a preheating treatment before a cold rolling at a preheating temperature of 200°C, and after the preheating, the hot-rolled coil is cold rolled to 0.16mm through 9 passes; a cold-rolled sheet is annealed at 990°C for 3min to obtain an annealed sheet; Comparative Example 2 does not undergo a preheating treatment before a cold rolling, multiple strip breakages occur during a cold rolling process, and ultimately no cold-rolled sheet is obtained.

For Comparative Example 3~6, after uncoiling the hot-rolled coil from the step (2), a pickling treatment is directly performed without a normalizing; then without a preheating, a primary cold-rolled sheet is directly produced through a first-stage cold rolling of 3~5 passes, with a reduction ratio of each pass controlled at 15~30%; and among these, Comparative Example 5 experiences multiple strip breakages during the first-stage cold rolling process, and ultimately no primary cold-rolled sheet is obtained.

A primary cold-rolled sheet obtained from Comparative Example 3, Comparative Example 4 and Comparative Example 6 undergoes a first annealing in a mixed atmosphere of 25%H₂+75%N₂ to obtain a primary annealed sheet; the primary annealed sheet is subjected to a second-stage cold rolling of 2~3 passes to produce a secondary cold-rolled sheet, with a reduction ratio of each pass controlled at 25~45%; after which the secondary cold-rolled sheet undergoes a second annealing in the mixed atmosphere of 25%H₂+75%N₂ to obtain a secondary annealed sheet.

(4) The secondary annealed sheet obtained from Examples 1~6 and Comparative Example 3, 4, 6 in the step (3), as well as the annealed sheet obtained from Comparative Example 1, are respectively subjected to a cooling, a coating and a finishing to obtain a finished product of a non-oriented silicon steel.

A testing of a metallographic structure, magnetic properties and a surface quality is performed on the finished product of the non-oriented silicon steel obtained from Examples 1~6 and Comparative Example 1, 3, 4, 6, including:
A. using a GB/T 6394 standard to measure an average grain size of a finished product , the average grain size of the finished product from Examples 1~6 and Comparative Example 3, 4, 6 is also an average grain size of a secondary annealed sheet, the average grain size of the finished product from Comparative Example 1 is also an average grain size of an annealed sheet; in addition, for Examples 1~6 and Comparative Example 3, 4, 6, an average grain size of a primary annealed sheet is additionally measured;
B. using a GB/T 3655 standard to detect an iron loss and a magnetic flux density;
C. using a GB/T 3076 standard to detect a tensile strength and a yield strength;
D. using a Cognex surface quality online monitoring system method to measure a surface quality, results are shown in Table 4.

**[Table 4]**

| | Final Thick., mm | 1st Ann. Grain Size, µm | Final Grain Size, µm | P_{1.0/400}, W/kg | P_{1.0/1000}, W/kg | B₅₀₀₀/T | Corrugation |
|---|---|---|---|---|---|---|---|
| Ex. 1 | 0.20 | 68 | 90 | 11.4 | 28.3 | 1.663 | None |
| Ex. 2 | 0.15 | 68 | 96 | 10.3 | 26.8 | 1.658 | None |
| Ex. 3 | 0.17 | 71 | 95 | 10.7 | 27.4 | 1.661 | None |
| Ex. 4 | 0.18 | 65 | 92 | 11.1 | 27.7 | 1.662 | None |
| Ex. 5 | 0.17 | 60 | 84 | 11.9 | 29.7 | 1.663 | None |
| Ex. 6 | 0.17 | 73 | 96 | 10.8 | 27.6 | 1.641 | None |
| Comp. 1 | 0.16 | / | 93 | 11.0 | 27.7 | 1.657 | None |
| Comp. 2 | strip breakage during cold rolling process, no finished product obtained | | | | | | |
| Comp. 3 | 0.17 | 53 | 73 | 15.7 | 36.8 | 1.662 | None |
| Comp. 4 | 0.16 | 72 | 96 | 10.8 | 28.2 | 1.636 | Yes |
| Comp. 5 | strip breakage during cold rolling process, no finished product obtained | | | | | | |
| Comp. 6 | 0.18 | 34 | 57 | 17.4 | 38.3 | 1.624 | None |

Through the above, it can be seen that although Comparative Example 1 and Comparative Example 2 match the chemical composition of an embodiment of the present application in terms of a chemical composition, the comparative examples adopt a traditional production process flow, i.e., a steelmaking, a continuous casting, a hot rolling, a normalizing, a pickling, a cold rolling, an annealing, that is, the normalizing is required before the pickling. Moreover, Comparative Example 1 underwent a 200°C preheating treatment before a cold rolling, and no strip breakage occurred during a cold rolling process, but still required 9 passes of the cold rolling to 0.16mm, with a low rolling efficiency and a high cold rolling difficulty; while Comparative Example 2 did not undergo a preheating treatment before a cold rolling, multiple strip breakages occurred during the cold rolling process, and ultimately no finished product was obtained.

Comparative Examples 3~6 adopt a process of a first-stage cold rolling and an annealing, a second-stage cold rolling and a finished product annealing described in the present application for a production; but:
in Comparative Example 3, a Si content is 3.23%, an Al content is 0.28%, a medium frequency iron loss P_{1.0/400} of a finished product is 15.7W/kg, a high frequency iron loss P_{1.0/1000} is 36.8W/kg, and the medium frequency iron loss and the high frequency iron loss do not meet requirements;
in Comparative Example 4, a Si content is 3.67%, an Al content is 0.84%, a magnetic flux density B₅₀₀₀ of a finished product is 1.636T, and the magnetic flux density does not meet requirements, and due to a relatively high Si and Al content, corrugated defects appear on a finished product surface, and a surface quality does not meet requirements;
in Comparative Example 5, a Si content is 3.85%, an Al content is 1.03%, due to an excessively high Si and Al content, a brittleness of a hot-rolled coil increases, multiple strip breakages occur during a first-stage cold rolling process, and no finished product is obtained;
in Comparative Example 6, a C content is 0.0037%, a S content is 0.0028, a N is 0.0033%, and C, S, N do not meet the composition requirements of the non-oriented silicon steel described in the present application, a finished product has poor magnetic properties, with a medium frequency iron loss P_{1.0/400} of 17.4W/kg, a high frequency iron loss P_{1.0/1000} of 38.3W/kg, and a magnetic flux density B₅₀₀₀ of 1.624T, all unable to meet the magnetic property requirements of the non-oriented silicon steel described in the present application.

Examples 1~6 adopt the preparation method of the non-oriented silicon steel described in the present application for a production, wherein:
Examples 1~6 satisfy a design of the present application in terms of a composition, a process, a structure and other aspects, with a good finished product surface quality and excellent magnetic properties, meeting a magnetic flux density B₅₀₀₀≥1.64T, a medium frequency iron loss P_{1.0/400}≤12.0W/kg, and a high frequency iron loss P_{1.0/1000}≤30.0W/kg of the finished product of the non-oriented silicon steel described in the present application, with no surface corrugation defects, and a short production process, a simple process, and an easy production;
wherein, Examples 1~4 adopt an optimal embodiment of 4.00%≤Si+Al≤4.20%, while in Example 5, Si+Al<4.0%, compared to Examples 1~4, a medium frequency iron loss P_{1.0/400} is 11.9W/kg and a high frequency iron loss P_{1.0/1000} is 29.7W/kg, and the medium frequency iron loss and the high frequency iron loss are higher compared to Example 3 of a same specification; similarly, in Example 6, Si+Al>4.2%, compared to Examples 1~4, a magnetic flux density B₅₀₀₀ is 1.641T, and the magnetic flux density is relatively low.

## Claims

1. A preparation method of a non-oriented silicon steel, wherein the preparation method comprises:
steelmaking, and preparing a continuous casting slab with a thickness of 220~240mm; a chemical composition of the continuous casting slab by mass percentage is: C≤0.0020%, S≤0.0015%, Si:3.30~3.60%, Al:0.40~0.80%, Mn:0.50~1.00%, P≤0.015%, Sn:0.03~0.06%, Nb≤0.003%, V≤0.003%, Ti≤0.003%, Cr≤0.02%, Ni≤0.02%, Cu≤0.02%, N≤0.0030%, with a balance being Fe and inevitable inclusions;
heating the continuous casting slab to 1080~1120°C and holding for 150~200min, and then rolling to form an intermediate slab with a thickness of 35~45mm, and then subjecting the intermediate slab to a finish rolling and a coiling to obtain a hot-rolled coil with a thickness of 2.00~2.70mm; wherein, a start rolling temperature of the finish rolling is 930~970°C, a finish rolling temperature is 820~860°C, a coiling temperature is 580~620°C, and a reduction ratio of the finish rolling is 93~95%;
directly subjecting the hot-rolled coil to a pickling treatment, and then producing a primary cold-rolled sheet of 0.50~0.70mm through a first-stage cold rolling of 3~5 passes, after which the primary cold-rolled sheet is held at 820°C~860°C for 2~5min in a mixed atmosphere of 25%H₂+75%N₂ to obtain a primary annealed sheet; wherein, a starting temperature of the first-stage cold rolling is 20~40°C, a total reduction ratio is 70~80%, and a reduction ratio of each pass is 15~30%;
subjecting the primary annealed sheet to a second-stage cold rolling of 2~3 passes to produce a secondary cold-rolled sheet of 0.15~0.20mm, after which the secondary cold-rolled sheet is held at 900°C~1000°C for 2~5min in the mixed atmosphere of 25%H₂+75%N₂ to obtain a secondary annealed sheet; wherein, a starting temperature of the second-stage cold rolling is 20~40°C, a total reduction ratio is 65~75%, and a reduction ratio of each pass is 25~45%;
subjecting the secondary annealed sheet to a cooling, a coating and a finishing to obtain a finished product of a non-oriented silicon steel.

2. The preparation method of a non-oriented silicon steel according to claim 1, wherein the chemical composition of the continuous casting slab by mass percentage is: 4.00%≤Si+Al≤4.20%.

3. The preparation method of a non-oriented silicon steel according to claim 1, wherein during the steelmaking, a molten iron and a scrap steel are first used for a converter smelting, followed by a vacuum refining and an alloying, to obtain a molten steel for the continuous casting slab; wherein, an end of the converter smelting by mass percentage is C: 0.020~0.050%, S≤0.0020%, P≤0.015%.

4. The preparation method of a non-oriented silicon steel according to claim 3, wherein a chemical composition of the molten iron by mass percentage is: C≥3.5%, S≤0.0015%, Si: 0.20~0.80%,Al≤0.10%, Mn≤0.60%, P≤0.15%, Nb≤0.003%, V≤0.03%, Ti≤0.10%, Cr≤0.03%, Ni≤0.02%, Cu≤0.02%, with a balance being Fe and inevitable inclusions.

5. The preparation method of a non-oriented silicon steel according to claim 3, wherein the scrap steel employs a scrap steel material that satisfies by mass percentage C≤0.0050%, S≤0.0025%, Si: 0.50~3.60%, Al≤1.0%, Mn: 0.20~1.50%, P≤0.05%, Sn≤0.20%, Nb≤0.003%, V≤0.003%, Ti≤0.003%, Cr≤0.02%, Ni≤0.02%, Cu≤0.02%.

6. The preparation method of a non-oriented silicon steel according to claim 3, wherein a weight of the scrap steel accounts for 20~25% of a total weight of the scrap steel and the molten iron.

7. The preparation method of a non-oriented silicon steel according to claim 1, wherein a work roll roughness Ra of a rolling mill used in the first-stage cold rolling is 3.5~3.0µm; a work roll roughness Ra of a rolling mill used in the second-stage cold rolling is 0.6~0.3µm.

8. The preparation method of a non-oriented silicon steel according to claim 1, wherein an average grain size of the primary annealed sheet is 50~80µm.

9. The preparation method of a non-oriented silicon steel according to claim 1, wherein an average grain size of the secondary annealed sheet is 60~120µm.

10. A non-oriented silicon steel, wherein a chemical composition of a substrate of the non-oriented silicon steel by mass percentage is: C≤0.0020%, S≤0.0015%, Si:3.30~3.60%, Al:0.40~0.80%, Mn:0.50~1.00%, P≤0.015%, Sn:0.03~0.06%, Nb≤0.003%, V≤0.003%, Ti≤0.003%, Cr≤0.02%, Ni≤0.02%, Cu≤0.02%, N≤0.0030%, with a balance being Fe and inevitable inclusions.

11. The non-oriented silicon steel according to claim 10, wherein the non-oriented silicon steel has a magnetic flux density B₅₀₀₀≥1.64T, a medium frequency iron loss P_{1.0/400}≤12.0W/kg, and a high frequency iron loss P_{1.0/1000}≤30.0W/kg.

12. The non-oriented silicon steel according to claim 10, wherein the non-oriented silicon steel has a thickness of 0.15mm, a magnetic flux density B₅₀₀₀≥1.64T, a medium frequency iron loss P_{1.0/400}≤11.0W/kg, and a high frequency iron loss P_{1.0/1000}≤27.0W/kg.

13. The non-oriented silicon steel according to claim 10, wherein the non-oriented silicon steel has a thickness of 0.20mm, a magnetic flux density B₅₀₀₀≥1.64T, a medium frequency iron loss P_{1.0/400}≤12.0W/kg, and a high frequency iron loss P_{1.0/1000}≤30.0W/kg.

14. The non-oriented silicon steel according to claim 10, wherein the non-oriented silicon steel has an average grain size of 60~120µm.

15. The non-oriented silicon steel according to claim 10, wherein the chemical composition of the substrate of the non-oriented silicon steel by mass percentage is: 4.00%≤Si+Al≤4.20%.
